# FASCICULE DE BREVET EUROPEEN

(11) **EP 2 723 221 B1**
(45) Date de publication et mention de la délivrance du brevet: **16.08.2017**
(21) Numéro de dépôt: 12741089.2
(22) Date de dépôt: 21.06.2012
(51) Int. Cl.: A47J 31/18

(54) **DISPOSITIF D'INFUSION A CIRCULATION FORCÉE**
BRAUVORRICHTUNG MIT ZWANGSUMLAUF
BREWING DEVICE WITH FORCED CIRCULATION

(30) Priorité: 24.06.2011 FR 1155598
(43) Date de publication de la demande: 30.04.2014
(73) Titulaire: Phi & Tea, 74210 Faverges (FR)
(72) Inventeur: LAZARETH, Philippe, 74370 Argonay (FR)
(74) Mandataire: Cabinet Poncet
(86) Numéro de dépôt international: PCT/IB2012/053158
(87) Numéro de publication internationale: WO 2012/176156

(56) Documents cités:
- US-A1- 2009 178 569

## Description

### DOMAINE TECHNIQUE DE L'INVENTION

La présente invention concerne les dispositifs permettant de préparer des boissons infusées, par exemple de type thé ou tisane.

De façon traditionnelle, on a préparé des boissons infusées en mettant la matière à infuser dans un récipient de type théière, en versant de l'eau chaude dans le récipient, puis en soutirant la boisson du récipient à travers une passoire.

En alternative, la matière à infuser peut être insérée dans une chaussette d'infusion ou dans une boule d'infusion, que l'on dispose dans le récipient.

Plus récemment, on a logé la matière à infuser dans des sachets perméables à l'eau, que l'on peut plonger dans l'eau chaude d'une tasse ou d'une théière.

Un premier inconvénient des dispositifs d'infusion connus est la difficulté pour maîtriser la durée d'infusion permettant de réaliser une qualité satisfaisante de l'infusion. En effet, on admet par exemple qu'une infusion correcte demande trois minutes environ pour le thé vert, cinq minutes environ pour le thé noir, sept minutes environ pour le thé blanc. Une durée d'infusion différente conduit soit à une infusion insuffisante si la durée est trop courte, soit à une infusion de qualité médiocre si la durée est trop longue et conduit au passage de matière indésirable dans la boisson, lui conférant une amertume.

L'obtention d'une infusion correcte nécessite donc de contrôler la durée d'infusion, ce qui nécessite de l'utilisateur une attention soutenue et le retrait nécessaire de la matière à infuser à l'issue de la durée d'infusion satisfaisante. Pendant ces opérations, l'utilisateur est alors perturbé dans les éventuelles autres activités qu'il voudrait entreprendre, et il est prudent qu'il attende la fin de la durée d'infusion.

Un autre inconvénient des dispositifs ci-dessus est l'obligation du retrait de la matière à infuser à l'issue de la durée d'infusion, ce qui nécessite de disposer de réceptacles appropriés pour recevoir la matière infusée, d'autant que cette matière contient de l'eau susceptible de s'égoutter et de provoquer des taches.

Plus récemment, on a proposé une machine à thé, dans laquelle une source d'eau chaude produit un courant d'eau chaude à travers un réceptacle de matière à infuser, l'eau chargée de matière à infuser se déversant immédiatement dans une tasse. L'inconvénient d'un tel dispositif est que l'infusion n'est pas correcte, puisqu'il s'agit plutôt d'un lavage de la matière à infuser et non d'une véritable infusion.

On connaît également du document US 2009/0178569 A1, un dispositif d'infusion comprenant un conteneur à paroi munie d'une ouverture supérieure d'accès, et apte à recevoir et contenir un volume d'eau, et comprenant un compartiment d'infusion apte à recevoir et contenir une matière à infuser et à la mettre en communication avec le conteneur. La paroi du conteneur est munie d'un passage d'infusion, situé à l'écart de l'ouverture supérieure d'accès pour être noyé dans le volume d'eau. Le compartiment d'infusion est conformé pour être rapporté et fixé sur le conteneur en regard du passage d'infusion qui le met en communication avec le conteneur. Le dispositif comprend un premier clapet, apte à obturer la communication entre le compartiment d'infusion et le conteneur tant que l'eau contenue dans le conteneur n'a pas atteint une température prédéterminée pour commencer l'infusion. En fin d'infusion, un second clapet prévu dans le conteneur s'ouvre pour déverser dans un récipient extérieur le liquide infusé contenu dans le conteneur. Un tel dispositif est relativement complexe, et nécessite un récipient extérieur pour recevoir le liquide infusé.

Le document WO 2012/090126 A1 constitue une divulgation intercalaire telle que définie à l'article 54(3) CBE. Ce document décrit un dispositif d'infusion comprenant :
- un premier conteneur à paroi munie d'une ouverture supérieure d'accès pour recevoir et contenir un volume d'eau,
- un second conteneur apte à recevoir et contenir une matière à infuser et communiquant avec le premier conteneur par un premier passage situé à l'écart de l'ouverture supérieure d'accès pour être noyé dans le volume d'eau,
- un second passage, distinct du premier passage, et mettant en communication le second conteneur avec le premier conteneur par un circuit en boucle par lequel l'eau peut circuler entre le premier conteneur et le second conteneur,
- des moyens de propulsion pour forcer la circulation de l'eau dans ledit circuit en boucle,
- des moyens pour interrompre la circulation d'eau entre le second conteneur et le premier conteneur à l'issue d'une durée d'infusion prédéterminée,
- un générateur de vibrations placé à côté du second conteneur pour appliquer des vibrations aux ingrédients contenus dans le second conteneur.

### EXPOSE DE L'INVENTION

Le problème proposé par la présente invention est de concevoir un dispositif d'infusion permettant une maîtrise correcte de la qualité et de la durée d'infusion, sans intervention de l'utilisateur.

Simultanément, l'invention vise à éviter d'avoir recours à des conteneurs extérieurs, et à éviter les risques de taches résultant de la manipulation de matière à infuser à l'issue de la durée d'infusion.

Simultanément, l'invention vise à concevoir un tel dispositif qui permette à l'utilisateur de s'abstenir de toute opération après le lancement de l'étape d'infusion, pour entreprendre d'autres activités sans attendre la fin de la durée d'infusion.

Selon un autre objet, l'invention vise à concevoir un tel dispositif portable, pouvant être transporté dès le lancement de l'étape d'infusion, pour faciliter les autres activités de l'utilisateur.

Selon un autre objet, l'invention vise à concevoir un tel dispositif qui soit autonome, simple à utiliser, en toute sécurité.

Selon un autre objet, l'invention prévoit un tel dispositif qui assure une infusion efficace et rapide, et qui soit peu onéreux.

Pour atteindre ces buts ainsi que d'autres, l'invention propose un dispositif d'infusion, comprenant :
- un conteneur à paroi munie d'une ouverture supérieure d'accès pour recevoir et contenir un volume d'eau,
- un compartiment d'infusion apte à recevoir et contenir une matière à infuser et communiquant avec le conteneur par un premier passage situé à l'écart de l'ouverture supérieure d'accès pour être noyé dans le volume d'eau,
- un second passage, distinct du premier passage, et mettant en communication le compartiment d'infusion avec le conteneur par un circuit en boucle par lequel l'eau peut circuler entre le conteneur et le compartiment d'infusion,
- des moyens de propulsion pour forcer la circulation de l'eau dans ledit circuit en boucle,
- des moyens pour interrompre la circulation d'eau entre le compartiment d'infusion et le conteneur à l'issue d'une durée d'infusion prédéterminée,
- à l'exclusion d'un générateur de vibrations placé à côté du compartiment d'infusion pour appliquer des vibrations à la matière à infuser dans le compartiment d'infusion.

L'exclusion ci-dessus a pour objet d'écarter les modes de réalisation divulgués dans le document intercalaire WO 2012/090126 A1, lesquels comprennent un générateur de vibrations placé à côté du second conteneur pour appliquer des vibrations aux ingrédients contenus dans le second conteneur.

Le circuit en boucle transfère efficacement la matière infusée du compartiment d'infusion vers le conteneur.

Du fait de l'interruption de la circulation d'eau à l'issue de la durée d'infusion correcte, l'utilisateur n'a plus à surveiller la durée d'infusion ni à retirer la matière à infuser à l'issue de cette durée. La durée est ainsi parfaitement maîtrisée. Simultanément, le risque de taches est supprimé, puisque le retrait de la matière à infuser n'est plus nécessaire pour interrompre l'infusion. Aucun récipient extérieur n'est nécessaire à l'issue de la durée d'infusion. De plus, l'utilisateur peut éventuellement transporter le dispositif avec lui pour entreprendre d'autres activités, sans avoir à attendre la fin de durée d'infusion, et sans risquer de manquer d'un réceptacle destiné à recevoir la matière à infuser à l'issue de la durée d'infusion.

En complément, le dispositif d'infusion peut être tel que :
- le premier passage comprend un premier orifice prévu dans le fond du conteneur et un orifice supérieur prévu dans la paroi supérieure du compartiment d'infusion, placés l'un en face de l'autre,
- les moyens pour interrompre la circulation d'eau comprennent un clapet obturant sélectivement le premier passage,
- le second passage met en communication, par le circuit en boucle, le conteneur et un orifice inférieur prévu en partie inférieure du compartiment d'infusion.

De la sorte, le clapet isole efficacement le conteneur vis-à-vis de la matière à infuser, pour interrompre la transmission de matière infusée vers le conteneur, même en cas de mouvement du dispositif d'infusion.

En pratique, on peut prévoir :
- des moyens d'entraînement pour déplacer le clapet entre une position de retrait et une position d'obturation du premier passage,
- des moyens de commande temporisée pour piloter les moyens d'entraînement et provoquer l'obturation du premier passage à l'issue de la durée d'infusion prédéterminée.

En alternative ou en complément, on peut prévoir que :
- les moyens de propulsion comprennent une pompe interposée dans le circuit en boucle,
- les moyens pour interrompre la circulation d'eau comprennent des moyens de commande temporisée qui interrompent le fonctionnement de la pompe à l'issue de la durée d'infusion prédéterminée.

Une telle structure est robuste et peu onéreuse, et l'arrêt de la pompe peut interrompre efficacement la transmission de matière infusée vers le conteneur tant qu'un mouvement de versement ou d'agitation n'est pas appliqué au dispositif d'infusion.

De préférence, en présence d'une pompe :
- le premier passage a une section transversale supérieure ou égale à la section transversale du compartiment d'infusion,
- le second passage est à proximité du premier passage.

On évite ainsi les difficultés d'amorçage de la pompe.

De préférence, en présence d'une pompe, les moyens de commande temporisée peuvent assurer un fonctionnement intermittent de la pompe pendant la durée d'infusion prédéterminée.

On garantit ainsi une excellente qualité d'infusion.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 illustre en perspective une vue générale d'un dispositif d'infusion temporisée selon un mode de réalisation de la présente invention ;
- la figure 2 est une vue de dessus du dispositif de la figure 1, conteneur enlevé ;
- la figure 3 est une vue de côté en coupe montrant les éléments essentiels du dispositif de la figure 1 ;
- la figure 4 est une vue en perspective du dispositif de la figure 1, la paroi de l'embase étant enlevée ;
- la figure 5 est une vue en perspective de dessous, capot d'embase enlevé, montrant les principaux organes d'actionnement du clapet dans un mode de réalisation particulier ;
- les figures 6 et 7 illustrent, en vue de dessus, le déplacement du clapet dans l'embase du mode de réalisation des figures précédentes ;
- la figure 8 est une vue en perspective en coupe partielle illustrant une capsule amovible d'infusion selon un premier mode de réalisation, engagée dans le compartiment d'infusion ;
- la figure 9 est une vue en perspective de dessous d'une capsule amovible d'infusion selon un mode de réalisation ;
- la figure 10 est une vue de dessous en perspective en coupe diamétrale de la capsule d'infusion de la figure 9 ; et
- les figures 11 à 13 illustrent schématiquement, en vue de côté en coupe, trois autres modes de réalisation d'un dispositif d'infusion temporisée selon l'invention.

### DESCRIPTION DES MODES DE REALISATION PREFERES

Comme illustré sur les figures, un dispositif d'infusion selon la présente invention comprend, de façon générale, un conteneur 1 et une embase 2 munie de moyens assurant une infusion temporisée.

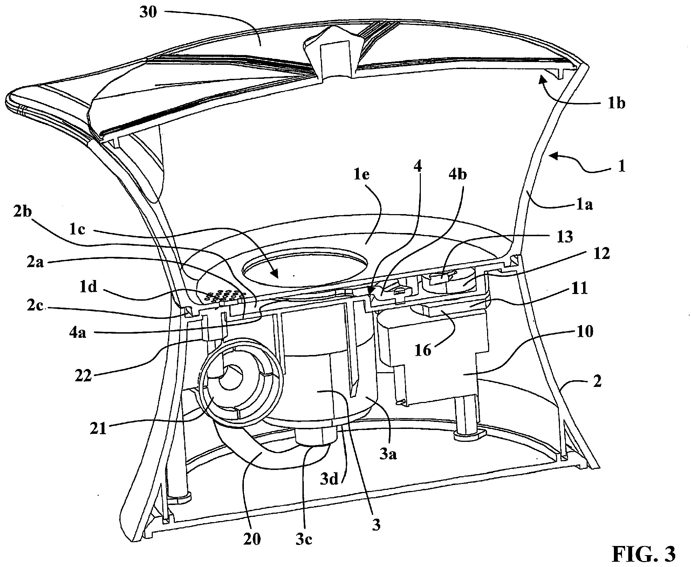

Le conteneur 1 est limité par une paroi 1 a (figure 3) dans laquelle sont prévus une ouverture supérieure d'accès 1 b et un premier passage 1 c.

Le premier passage 1 c est à l'écart de l'ouverture supérieure d'accès 1 b, situé dans le conteneur 1 à un niveau lui permettant d'être noyé dans un volume d'eau introduit dans le conteneur 1 lors de l'utilisation.

Le premier passage 1 c communique avec un compartiment d'infusion 3 conformé pour recevoir et contenir une matière à infuser telle que du thé ou de la tisane.

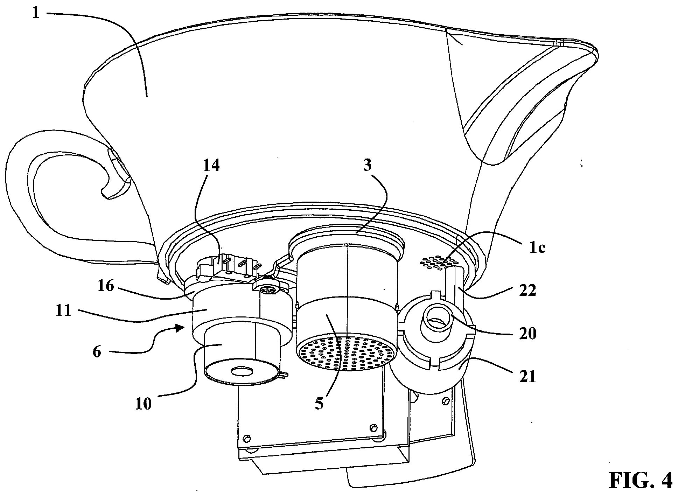

L'embase 2 contient le compartiment d'infusion 3, apte à recevoir lui-même une cartouche d'infusion 5 (figures 4, 8 à 10) sous forme d'une enceinte amovible à paroi perméable à l'eau et apte à être engagée dans le compartiment d'infusion 3 depuis l'intérieur du conteneur 1.

Dans le mode de réalisation illustré, il est prévu un clapet 4 temporisé, structuré et disposé de façon à obturer le premier passage 1 c et interrompre ainsi la communication entre le compartiment d'infusion 3 et le conteneur 1 à l'issue d'une durée d'infusion prédéterminée.

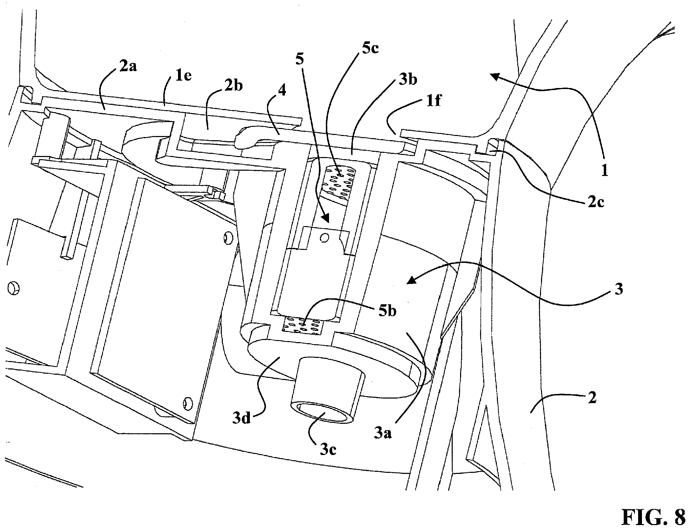

Le compartiment d'infusion 3 est un logement plus petit que le conteneur 1 et communiquant avec le conteneur 1 par le premier passage 1c. En pratique, la section transversale du premier passage 1 c est sensiblement égale à la section transversale du compartiment d'infusion 3, qui lui-même comporte une paroi latérale 3a étanche et cylindrique, une paroi supérieure 2a constituant elle-même une partie de la paroi supérieure de l'embase 2, un orifice supérieur 3b (figure 8) prévu dans la paroi supérieure 2a, et un fond 3d fermé et muni d'un orifice inférieur 3c central. Le premier passage 1 c comprend l'orifice supérieur 3b du compartiment d'infusion 3 et un premier orifice 1f prévu dans le fond 1e du conteneur 1, les deux orifices 3b et 1f étant placés l'un en face de l'autre.

Le compartiment d'infusion 3 est de préférence de forme cylindrique, c'est-à-dire avec une section constante selon sa hauteur, cette section étant sensiblement égale à celle du premier passage 1c. Ainsi, le compartiment d'infusion 3 est adapté pour recevoir et contenir une cartouche d'infusion 5 amovible, à parois perméables à l'eau, apte à être engagée dans le compartiment d'infusion 3 par passage à travers le conteneur 1 et le premier passage 1c.

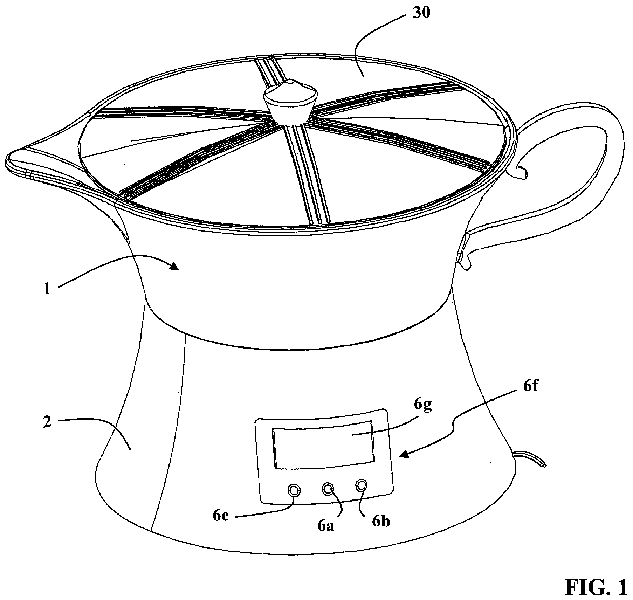

En considérant les figures 1 à 3, on distingue la structure générale du dispositif.

L'ouverture supérieure 1 b du conteneur 1 est fermée par un couvercle amovible 30. Le conteneur 1 a une forme évasée vers le haut, bien que toutes autres formes ou tailles puissent être définies sans sortir du cadre de l'invention. Le fond 1e du conteneur 1 comporte le premier passage 1c et un deuxième passage 1 d. En périphérie du fond 1 e, le conteneur se raccorde à l'embase 2 qui elle-même est évasée vers le bas et contient les organes fonctionnels du dispositif. L'assemblage du conteneur 1 sur l'embase 2 peut avantageusement se faire par un encliquetage 2c périphérique, avec des moyens d'étanchéité périphériques. L'encliquetage peut être réversible, pour favoriser le nettoyage du conteneur 1 et de la face supérieure de l'embase 2.

En alternative, le conteneur 1 peut être rendu solidaire de l'embase 2, formant un ensemble non démontable.

L'embase 2 comporte une paroi supérieure 2a dans laquelle est prévu un logement 2b où se déplace le clapet 4. L'étanchéité du logement 2b est assurée par les moyens d'étanchéité périphériques entre le conteneur 1 et l'embase 2.

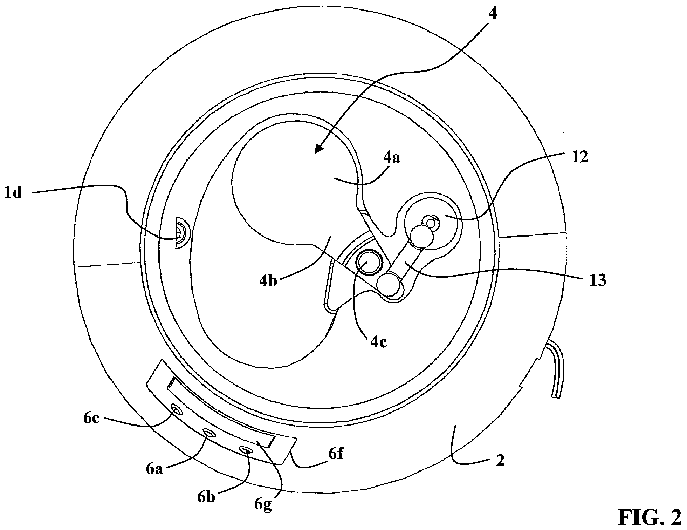

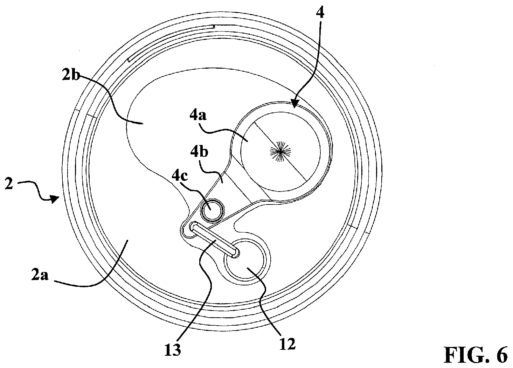

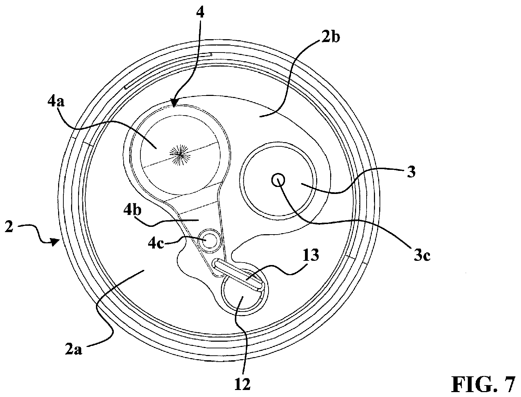

Le clapet 4 temporisé est monté déplaçable latéralement dans le logement de clapet 2b, entre une position de retrait (figure 7) qui libère la communication entre le compartiment d'infusion 3 et le conteneur 1 pour le passage de liquides, et une position d'obturation (figures 2 et 6) dans laquelle le clapet 4 interrompt le passage de liquides entre le compartiment d'infusion 3 et le conteneur 1.

Dans la réalisation illustrée sur les figures, le clapet 4 est monté déplaçable par rotation. On voit mieux le mouvement de rotation en considérant les vues de dessus illustrées sur les figures 6 et 7 : sur la figure 7, le clapet temporisé 4 est en position de retrait, dans le logement de clapet 2b, laissant apparaître le compartiment d'infusion 3 ; sur la figure 6, le clapet 4 est en position d'obturation, occultant le compartiment d'infusion 3.

En pratique, le clapet 4 comporte un disque obturateur 4a solidaire d'un manche 4b articulé sur un axe 4c de l'embase 2. Ainsi, le clapet 4 pivote autour de l'axe 4c, entre sa position de retrait (figure 7) et sa position d'obturation (figure 6). Il est guidé notamment par le glissement de sa face principale inférieure sur le fond du logement de clapet 2b.

Des moyens d'entraînement 6 assurent le déplacement du clapet 4 entre sa position de retrait et sa position d'obturation.

Dans la réalisation illustrée sur les figures, les moyens d'entraînement 6 comprennent un moteur électrique de clapet 10 (figure 3) relié mécaniquement au clapet 4 par une transmission démultipliée 11 dont le disque rotatif de sortie 12 est relié au manche 4b par une bielle 13, mieux visible sur la figure 2.

De la sorte, la rotation du moteur de clapet 10 dans un même sens produit une rotation alternative du clapet 4 entre ses positions de retrait et d'obturation, comme on le comprend à partir des figures 6 et 7.

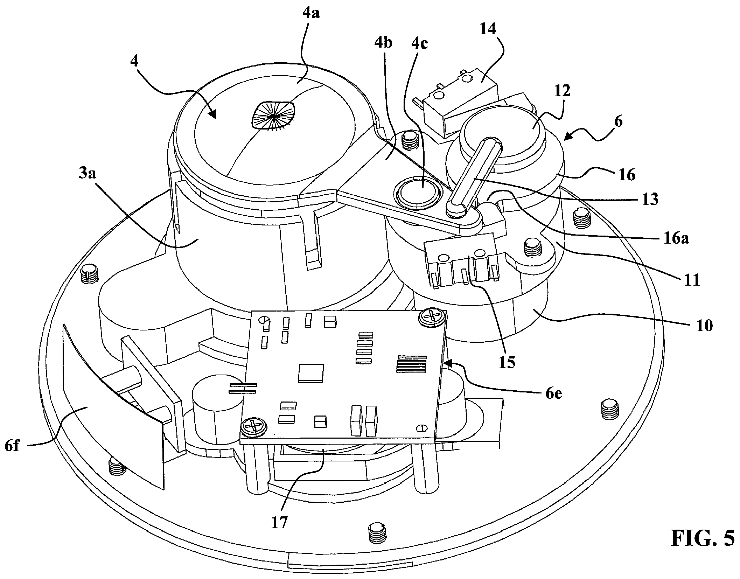

Deux capteurs de position angulaire 14 et 15 (figure 5), coopérant avec une came 16 à ergots 16a, produisent un signal transmis à une commande temporisée 6e lorsque le clapet 4 arrive en position de retrait ou en position d'obturation.

La commande temporisée 6e assure l'alimentation du moteur de clapet 10, à partir d'une source d'alimentation telle qu'une pile ou accumulateur rechargeable 17. En alternative, la source d'alimentation peut être le secteur d'alimentation électrique. La commande temporisée 6e peut assurer l'ouverture ou la fermeture du clapet 4 à réception d'un ordre de fonctionnement produit par une action de l'utilisateur sur un poussoir 6b d'un organe d'entrée 6f (figures 1, 2 et 5). La commande temporisée 6e provoque l'arrêt du moteur de clapet 10 pour le maintien du clapet 4 en position ouverte ou fermée à réception d'un signal provenant d'un des capteurs de position angulaire 14 ou 15. Ensuite, la commande temporisée 6e provoque l'alimentation du moteur de clapet 10 à partir de la source d'alimentation 17 pour la fermeture du clapet 4 à l'issue de la durée d'infusion prédéterminée.

L'orifice inférieur 3c du compartiment d'infusion 3 communique par une canalisation intermédiaire 20 avec une pompe 21 qui elle-même communique par une canalisation d'extrémité 22 avec un second passage 1 d prévu dans la paroi de fond 1e du conteneur 1, à proximité du premier passage 1c.

Ainsi, le compartiment d'infusion 3, la canalisation intermédiaire 20, la pompe 21 et la canalisation d'extrémité 22 forment un circuit en boucle par lequel l'eau peut circuler entre le conteneur 1 et le compartiment d'infusion 3. La pompe 21 force la circulation de l'eau dans ce circuit en boucle, et constitue des moyens de propulsion de l'eau.

Pour interrompre la circulation d'eau entre le compartiment d'infusion 3 et le conteneur 1, on peut à la fois interrompre l'alimentation de la pompe 21 et obturer le premier passage 1 c par le clapet 4.

L'interruption d'alimentation de la pompe 21 peut toutefois suffire pour interrompre la circulation d'eau et la propagation de l'infusion depuis le compartiment d'infusion 3 vers le conteneur 1, de sorte que l'on peut prévoir un mode de réalisation simplifié de l'invention en omettant la présence du clapet 4 et de ses moyens d'entraînement. Ainsi, dans ce mode de réalisation simplifié, non illustré sur les figures, les moyens pour interrompre la circulation d'eau entre le compartiment d'infusion 3 et le conteneur 1 peuvent comprendre la pompe 21 seule, en l'absence de clapet 4 et de ses moyens d'entraînement.

Toutefois, le premier passage 1 c étant largement ouvert, en l'absence de clapet 4, la propagation de l'infusion peut se poursuivre d'une certaine manière, notamment en cas de mouvement du dispositif d'infusion, et il peut être préférable de prévoir un clapet 4.

Autrement dit, dans la réalisation illustrée, les moyens pour interrompre la circulation d'eau entre le compartiment d'infusion 3 et le conteneur 1 à l'issue d'une durée d'infusion prédéterminée comprennent à la fois le clapet 4 et la pompe 21, l'un et l'autre étant pilotés par la commande temporisée 6e.

La cartouche d'infusion 5 présente de préférence une section transversale légèrement inférieure à celle du compartiment d'infusion 3.

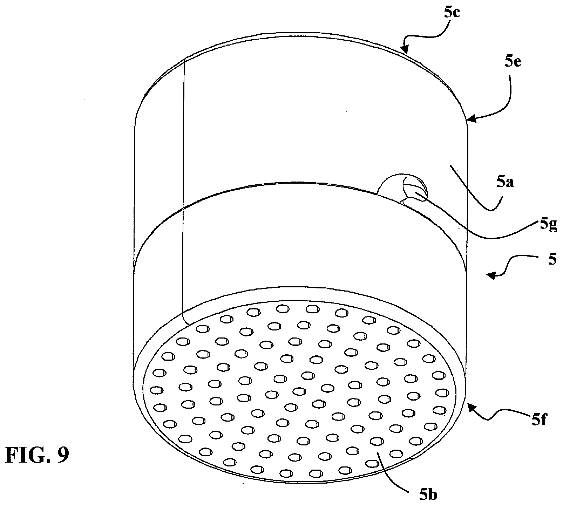

Un mode de réalisation d'une telle cartouche d'infusion 5 est illustré sur la figure 9, et comprend une structure cylindrique de révolution avec une paroi latérale 5a pleine, une paroi de fond 5b, une paroi de sommet 5c. La paroi de fond 5b et la paroi de sommet 5c sont perméables à l'eau, par exemple munies d'une série de trous traversants. La paroi latérale 5a est étanche, formée par exemple de deux tronçons séparables pour le remplissage de thé ou tisane, et que l'on peut raccorder par un système de baïonnette 5g.

La cartouche d'infusion 5 comprend ainsi deux parties cylindriques de cartouche 5e et 5f qui s'emboitent axialement l'une avec l'autre, et sont retenues par le système de baïonnette 5g.

En position dans le compartiment d'infusion 3, la cartouche d'infusion 5 est entièrement contenue dans le compartiment d'infusion 3, en retrait au-dessous du premier passage 1 c, et également en retrait du fond 3d du compartiment d'infusion 3, à l'écart duquel elle est maintenue par des butées prévues dans le compartiment d'infusion 3.

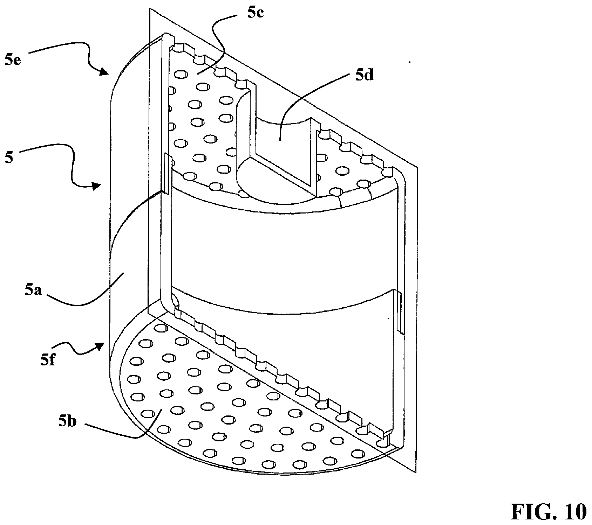

De préférence, comme illustré en coupe sur la figure 10, la paroi de sommet 5c comprend un évidement borgne 5d de préhension, dans lequel on peut venir loger une tige expansible radialement formant outil de préhension pour prendre prise afin de permettre la manipulation de la cartouche d'infusion 5, pour son retrait ou son engagement dans le compartiment d'infusion 3.

On pourra toutefois, sans sortir du cadre de l'invention, prévoir d'autres formes de compartiments d'infusion 3 et de cartouches d'infusion 5.

La dimension de la cartouche d'infusion 5 sera choisie par l'homme du métier en fonction de la taille du conteneur 1, de façon que la cartouche d'infusion 5 puisse contenir une quantité de thé ou de tisane suffisante pour produire une infusion correcte du volume d'eau contenu dans le conteneur 1.

Dans le dispositif selon l'invention, il est possible d'utiliser une cartouche 5 rigide à remplir telle que décrite ci-dessus. En alternative, on pourra aussi utiliser par exemple une cartouche rigide pré-remplie, ou encore une cartouche souple pré-remplie dont la paroi peut être en papier, en tissu, ou en non-tissé.

Comme on le voit sur les figures 1 et 2, l'organe d'entrée 6f comprend un afficheur 6g, un bouton poussoir 6a pour commander le début de comptage de la durée d'infusion prédéterminée, un bouton poussoir 6b qui commande alternativement l'ouverture et la fermeture volontaires du clapet 4, et un bouton poussoir 6c qui commande le choix de la durée du cycle d'infusion.

L'afficheur 6g peut confirmer la durée choisie du cycle d'infusion, et éventuellement l'écoulement du temps. Par exemple, l'écoulement du temps peut être visualisé sous forme digitale, tandis que la durée choisie peut être visualisée par des pictogrammes différentiels.

On comprend que la commande temporisée 6e peut être réalisée par exemple à partir d'un microcontrôleur intégré, programmé pour constituer une minuterie déclenchée par l'actionnement du poussoir d'entrée 6a, et commandant des commutateurs électroniques tels que des transistors connectés en série entre une source d'énergie électrique continue embarquée et les organes fonctionnels du dispositif tels que le moteur de clapet 10 et la pompe 21.

Lors de sa rotation, la pompe 21 fait circuler l'eau dans le circuit fermé constitué par le compartiment d'infusion 3, la canalisation intermédiaire 20, la pompe 21, la canalisation d'extrémité 22 et le conteneur 1.

De préférence, lors de sa rotation, la pompe 21 fait circuler l'eau dans le sens allant du compartiment d'infusion 3 vers le second passage 1 d, par aspiration dans le fond 3d du compartiment d'infusion 3 et refoulement dans le conteneur 1 par le second passage 1 d. De la sorte, les produits d'infusion, qui ont tendance à se propager naturellement vers le fond 3d du compartiment d'infusion 3, sont propulsés dans le conteneur 1 par le second passage 1 d.

Les moyens de commande temporisée 6e pilotent à la fois la pompe 21 et le clapet 4.

Essentiellement, les moyens de commande temporisée 6e interrompent la circulation d'eau entre le compartiment d'infusion 3 et le conteneur 1 à l'issue d'une durée d'infusion prédéterminée choisie par l'utilisateur entre des durées prédéfinies.

Le fonctionnement d'un dispositif d'infusion tel que décrit ci-dessus est simple, fiable et commode.

Initialement, le dispositif d'infusion est vide, le conteneur 1 étant solidarisé à l'embase 2. Si le clapet 4 est fermé, l'utilisateur actionne le poussoir 6b pour ouvrir le clapet 4. Il retire la cartouche d'infusion 5 par extraction hors du premier passage 1c, il la remplit de thé ou de tisane, et la replace dans le compartiment d'infusion 3.

Par une, deux ou trois impulsions appliquées sur un poussoir 6c, l'utilisateur peut choisir et mémoriser dans la commande temporisée 6e la durée d'infusion prédéterminée, parmi des durées prédéfinies. Avantageusement, les durées prédéfinies peuvent être 2'35", 3'30", 4'35". Ces durées conviennent pour la plupart des infusions de thé ou de tisane. En alternative, la commande temporisée 6e peut être programmée pour permettre à l'utilisateur d'entrer toute autre durée d'infusion choisie, par exemple en incrémentant la durée de seconde en seconde.

L'utilisateur actionne le poussoir 6c avant la manoeuvre du poussoir 6a pour la mise en route et l'initialisation du comptage de la durée d'infusion prédéfinie.

Pour lancer l'infusion, l'utilisateur verse de l'eau chaude dans le conteneur 1, et sollicite le poussoir 6a de l'organe d'entrée 6f pour initialiser la temporisation selon la durée d'infusion prédéterminée mémorisée. Il peut alors déplacer librement le dispositif, par exemple pour entreprendre d'autres activités, sans attendre la fin de l'infusion.

Pendant l'infusion, la commande temporisée 6e provoque la rotation de la pompe 21 par intermittence, par exemple selon une succession d'étapes : 1'25 d'arrêt, 15" de marche, 40" d'arrêt, 15" de marche... etc, selon la durée du cycle d'infusion. A la fin de la durée d'infusion prédéterminée, mémorisée dans la commande temporisée 6e, la commande temporisée 6e provoque l'arrêt de rotation de la pompe 21 et la fermeture du clapet 4 qui vient obturer le premier passage 1c. De la sorte, la matière à infuser se trouve isolée du conteneur 1, et le liquide contenu dans le conteneur 1 ne subit plus l'effet de l'infusion.

Le liquide infusé présent dans le conteneur 1 est prêt à la consommation, et peut attendre d'être consommé sans être altéré par une infusion persistante.

Dans le mode de réalisation décrit ci-dessus en relation avec les figures 1 à 10, le dispositif d'infusion selon l'invention ne comprend pas de moyens de chauffe, et l'utilisateur doit verser dans le conteneur 1 de l'eau suffisamment chaude pour permettre l'infusion, comme dans une théière habituelle.

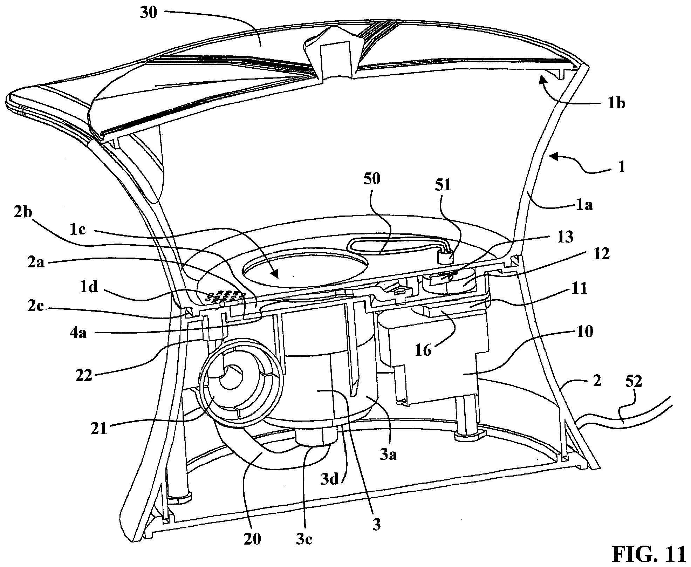

Toutefois, l'invention n'est pas limitée à un tel dispositif dépourvu de moyens de chauffe. Ainsi, les figures 11 à 13 illustrent trois modes de réalisation alternatifs dans lesquels le dispositif comporte en outre des moyens de chauffe pour amener à température appropriée l'eau que l'utilisateur a pu introduire froide dans le conteneur 1 et dans le compartiment d'infusion 3.

Dans les trois modes de réalisation illustrés sur les figures 11 à 13, les moyens de chauffe comportent une résistance électrique 50, dont la puissance est choisie de manière à pouvoir chauffer le volume d'eau contenu dans le dispositif pour l'amener à une température d'infusion, par exemple une température voisine de 100°C. La résistance électrique 50 peut-être d'un type tel que ceux habituellement utilisés dans les bouilloires électriques. Il peut s'agir d'une ou de plusieurs résistances électriques. La résistance électrique 50 est associée à des moyens de connexion électrique 51 aptes à connecter la résistance électrique à une source extérieure d'énergie électrique, par exemple au réseau de distribution habituel d'énergie électrique. En pratique, les moyens de connexion électrique 51 peuvent comprendre un cordon d'alimentation électrique 52 et des moyens de raccordement tels que ceux habituellement utilisés pour les bouilloires électriques.

Le dispositif peut en outre comporter un commutateur en série avec le cordon d'alimentation électrique 52, de façon à piloter la mise en fonctionnement ou l'arrêt de la résistance électrique 50.

Dans le mode de réalisation illustré sur la figure 11, la résistance électrique 50 est disposée directement à l'intérieur du conteneur 1. La résistance électrique 50 est alors solidaire de la paroi de fond 1 e du conteneur 1. Dans la réalisation préférée dans laquelle le conteneur 1 est amovible vis-à-vis de l'embase 2, on prévoit de préférence des moyens de connexion électrique séparables, comme une fiche électrique mâle et une prise électrique femelle correspondante, l'une solidaire de la paroi de fond 1e du conteneur 1, l'autre solidaire de la paroi supérieure 2a de l'embase 2, permettant la déconnexion de la résistance 50 lors de la séparation du conteneur 1 vis-à-vis de l'embase 2. La prise électrique solidaire de l'embase 2 est raccordée au cordon d'alimentation 52, pour assurer la continuité de conduction de l'énergie électrique.

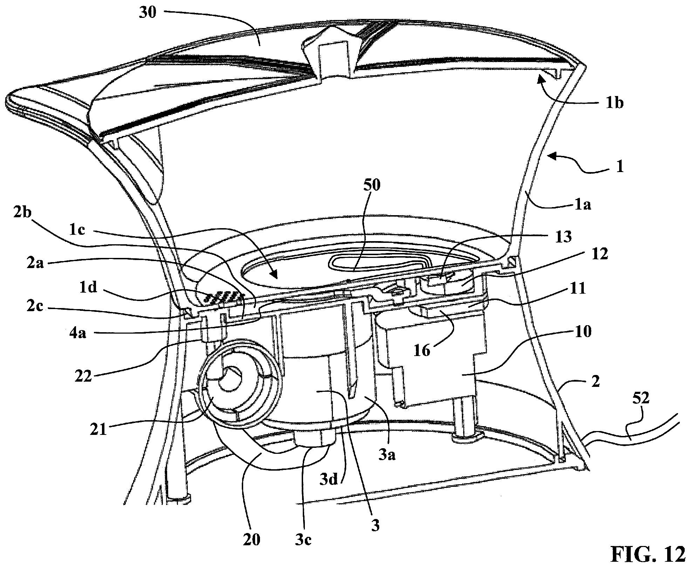

Dans le mode de réalisation de la figure 12, le conteneur 1 ne comporte pas de paroi de fond, mais se trouve ouvert vers le bas. Le fond du conteneur 1 est en réalité constitué par la paroi supérieure 2a de l'embase 2. Dans ce cas, la résistance électrique 50, également en contact direct avec l'eau contenue dans le conteneur 1, est solidaire de la paroi supérieure 2a de l'embase 2, est raccordée électriquement au cordon d'alimentation 52, et pénètre dans le conteneur 1 à travers son ouverture inférieure.

Dans ce cas, il n'est pas besoin de déconnecter la résistance électrique 50 lors de la séparation du conteneur 1 vis-à-vis de l'embase 2. C'est le mode de réalisation préféré parmi les modes de réalisation assurant le chauffage de l'eau.

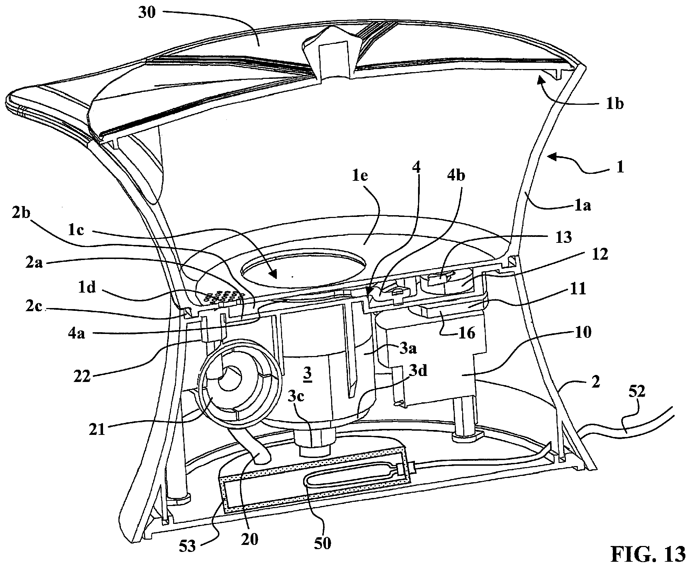

Dans le mode de réalisation de la figure 13, la résistance électrique 50 est disposée dans une cuve inférieure 53 qui est elle-même en communication avec le conteneur 1 par le circuit en boucle 20, 21, 22 et les moyens de propulsion 21 tels que la pompe. La résistance électrique 50 est également connectée électriquement au cordon d'alimentation 52. Dans ce cas, l'eau chauffée par la résistance électrique 50 est amenée dans le conteneur 1 et dans le compartiment d'infusion 3 par la pompe 21.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif d'infusion, comprenant :
- un conteneur (1) à paroi (1 a) munie d'une ouverture supérieure d'accès (1b) pour recevoir et contenir un volume d'eau,
- un compartiment d'infusion (3) apte à recevoir et contenir une matière à infuser et communiquant avec le conteneur (1) par un premier passage (1c) situé à l'écart de l'ouverture supérieure d'accès (1b) pour être noyé dans le volume d'eau, **caractérisé en ce qu'**il comprend en outre :
- un second passage (1d), distinct du premier passage (1c), et mettant en communication le compartiment d'infusion (3) avec le conteneur (1) par un circuit en boucle (20, 21, 22) par lequel l'eau peut circuler entre le conteneur (1) et le compartiment d'infusion (3),
- des moyens de propulsion (21) pour forcer la circulation de l'eau dans ledit circuit en boucle (20, 21, 22),
- des moyens (4, 21, 6e) pour interrompre la circulation d'eau entre le compartiment d'infusion (3) et le conteneur (1) à l'issue d'une durée d'infusion prédéterminée,
- à l'exclusion d'un générateur de vibrations placé à côté du compartiment d'infusion (3) pour appliquer des vibrations à la matière à infuser dans le compartiment d'infusion (3).

2. - Dispositif d'infusion selon la revendication 1, **caractérisé en ce que** :
- le premier passage (1c) comprend un premier orifice (1f) prévu dans le fond (1e) du conteneur (1) et un orifice supérieur (3b) prévu dans la paroi supérieure (2a) du compartiment d'infusion (3), placés l'un en face de l'autre,
- les moyens pour interrompre la circulation d'eau comprennent un clapet (4) obturant sélectivement le premier passage (1 c),
- le second passage (1d) met en communication, par le circuit en boucle (20, 21, 22), le conteneur (1) et un orifice inférieur (3c) prévu en partie inférieure du compartiment d'infusion (3).

3. - Dispositif d'infusion selon la revendication 2, **caractérisé en ce qu'**il comprend :
- des moyens d'entraînement (6) pour déplacer le clapet (4) entre une position de retrait et une position d'obturation du premier passage (1c),
- des moyens de commande temporisée (6e) pour piloter les moyens d'entraînement (6) et provoquer l'obturation du premier passage (1 c) à l'issue de la durée d'infusion prédéterminée.

4. - Dispositif d'infusion selon l'une quelconque des revendications 1 à 3, **caractérisé en ce que** :
- les moyens de propulsion comprennent une pompe (21) interposée dans le circuit en boucle (20, 21, 22),
- les moyens pour interrompre la circulation d'eau comprennent des moyens de commande temporisée (6e) qui interrompent le fonctionnement de la pompe (21) à l'issue de la durée d'infusion prédéterminée.

5. - Dispositif d'infusion selon la revendication 4, **caractérisé en ce que** :
- le premier passage (1c) a une section transversale supérieure ou égale à la section transversale du compartiment d'infusion (3),
- le second passage (1d) est à proximité du premier passage (1c).

6. - Dispositif d'infusion selon l'une des revendications 4 ou 5, **caractérisé en ce que** les moyens de commande temporisée (6e) assurent un fonctionnement intermittent de la pompe (21) pendant la durée d'infusion prédéterminée.

7. - Dispositif d'infusion selon l'une quelconque des revendications 4 à 6, **caractérisé en ce que** la pompe (21) force la circulation d'eau dans le circuit en boucle (20, 21, 22) dans le sens allant du compartiment d'infusion (3) vers le second passage (1d).

8. - Dispositif d'infusion selon l'une quelconque des revendications 1 à 7, **caractérisé en ce que** le compartiment d'infusion (3) est associé à une cartouche d'infusion (5) à paroi latérale (5a) pleine et à paroi de fond (5b) et paroi de sommet (5c) perméables à l'eau, il comprend des butées maintenant la cartouche d'infusion (5) à l'écart du fond (3d) du compartiment d'infusion (3), et il comprend, en partie centrale de son fond (3d), un orifice inférieur (3c) raccordé au second passage (1d) par le circuit en boucle (20, 21, 22).

9. - Dispositif d'infusion selon la revendication 8, **caractérisé en ce que** la cartouche d'infusion (5) comprend, dans sa paroi de sommet (5c), un évidement borgne (5d) de préhension dans lequel un outil de préhension peut prendre prise pour la manipulation de la cartouche d'infusion (5).

10. - Dispositif d'infusion selon l'une des revendications 8 ou 9, **caractérisé en ce que** la cartouche d'infusion (5) comprend deux parties cylindriques de cartouche (5e, 5f) qui s'emboitent axialement l'une avec l'autre.

11. - Dispositif d'infusion selon l'une quelconque des revendications 1 à 10, **caractérisé en ce que** les moyens de commande temporisée (6e) interrompent la circulation d'eau entre le compartiment d'infusion (3) et le conteneur (1) à l'issue d'une durée d'infusion prédéterminée choisie par l'utilisateur entre des durées prédéfinies.

12. - Dispositif d'infusion selon la revendication 11, **caractérisé en ce que** les durées prédéfinies sont 2'35", 3'30", 4'35".

13. - Dispositif d'infusion selon l'une quelconque des revendications 1 à 12, **caractérisé en ce qu'**il comprend en outre :
- des moyens de chauffe à résistance(s) électrique(s) (50) aptes à chauffer ledit volume d'eau pour l'amener à une température d'infusion,
- des moyens de connexion électrique (51, 52) aptes à connecter la ou les résistances électriques (50) à une source extérieure d'énergie électrique.

14. - Dispositif d'infusion selon la revendication 13, **caractérisé en ce que** la ou les résistances électriques (50) sont disposées dans le conteneur (1), fixées à la paroi de fond (1 e) du conteneur (1) ou à la paroi supérieure (2a) d'une embase (2) sur laquelle s'adapte le conteneur (1).

15. - Dispositif d'infusion selon la revendication 13, **caractérisé en ce que** la ou les résistances électriques (50) sont disposées dans une cuve inférieure (53) en communication avec le conteneur (1) par le circuit en boucle (20, 21, 22) et les moyens de propulsion (21).

## Patentansprüche

1. Aufgussvorrichtung, umfassend:
- einen Behälter (1), dessen Wand (1a) eine obere Befüllungsöffnung (1b) aufweist und der zur Aufnahme eines Wasservolumens ausgebildet ist,
- ein Aufgussfach (3) zur Aufnahme einer Aufgusssubstanz, das mit dem Behälter (1) über einen ersten Verschluss (1c) kommuniziert, der von der oberen Befüllungsöffnung (1b) einen Abstand hat, um in das Wasservolumen einzutauchen,
**dadurch gekennzeichnet, dass** ferner vorgesehen sind :
- ein von dem ersten Durchlass (1c) verschiedener zweiter Durchlass (1d), der das Aufgussfach (3) mit dem Behälter (1) über eine Leitungsschleife (20, 21, 22) in Verbindung setzt, durch die das Wasser zwischen dem Behälter (1) und dem Aufgussfach (3) zirkulieren kann,
- Vortriebsmittel (21) für den Zwangsumlauf des Wassers in der Leitungsschleife (20, 21, 22),
- Mittel (4, 21, 6a) zum Unterbrechen des Wasserumlaufs zwischen dem Aufgussfach (3) und dem Behälter (1) nach einer vorbestimmten Aufgussdauer,
- unter Ausschluss eines Schwingungserzeugers, der neben dem Aufgussfach (3) angeordnet ist, um die Aufgusssubstanz in dem Aufgussfach (3), in Vibration zu versetzen.

2. Aufgussvorrichtung nach Anspruch 1, **dadurch gekennzeichnet, dass**:
- der erste Durchlass (1c) eine erste Öffnung (1f) aufweist, die in dem Boden (1e) des Behälters (1) vorgesehen ist, sowie eine dieser gegenüberliegende obere Öffnung (3b) in der oberen Wand (2a) des Aufgussfachs (3),
- die Mittel zum Unterbrechen des Wasserumlaufs eine Klappe (4) aufweisen, die den ersten Durchlass (1c) selektiv schließen,
- der zweite Durchlass (1d) den Behälter (1) über die Leitungsschleife (20, 21, 22) mit einer unteren Öffnung (3c) im unteren Teil des Aufgussfachs (3) verbindet.

3. Aufgussvorrichtung nach Anspruch 2, **dadurch gekennzeichnet, dass** diese aufweist:
- Antriebsmittel (6) zum Verstellen der Klappe (4) zwischen einer Rückzugsposition und einer Position zum Verschließen des ersten Durchlasses (1c),
- Mittel für die zeitgesteuerte Betätigung (6e) der Antriebsmittel (6) und des Verschlusses des ersten Durchlasses (1c) am Ende der vorbestimmten Aufgussdauer.

4. Aufgussvorrichtung nach einem der Ansprüche 1 bis 3, **dadurch gekennzeichnet, dass** :
- die Vortriebsmittel eine Pumpe (21) aufweisen, die in die Leitungsschleife (20, 21, 22) eingesetzt ist,
- die Mittel zum Unterbrechen des Wasserumlaufs Mittel für die zeitgesteuerte Betätigung (6e) haben, die den Betrieb der Pumpe (21) am Ende der vorbestimmten Aufgussdauer unterbrechen.

5. Vorrichtung nach Anspruch 4, **dadurch gekennzeichnet, dass** :
- der erste Durchlass (1c) einen Querschnitt hat, der größer oder gleich dem Querschnitt des Aufgussfachs (3) ist,
- der zweite Durchlass (1d) in der Nähe des ersten Durchlasses (1c) liegt.

6. Aufgussvorrichtung nach Anspruch 4 oder 5, **dadurch gekennzeichnet, dass** die Mittel für die zeitgesteuerte Betätigung (6e) für einen intermittierenden Betrieb der Pumpe (21) während der vorbestimmten Aufgussdauer sorgen.

7. Aufgussvorrichtung nach einem der Ansprüche 4 bis 6, **dadurch gekennzeichnet, dass** die Pumpe (21) den Zwangsumlauf des Wassers in der Leitungsschleife (20, 21, 22) von dem Aufgussfach (3) in Richtung auf den zweiten Durchlass (1d) forciert.

8. Aufgussvorrichtung nach einem der Ansprüche 1 bis 7, **dadurch gekennzeichnet, dass** das Aufgussfach (3) mit einer Aufgusskapsel (5) verbunden ist, die eine geschlossene Seitenwand (5a), einen wasserdurchlässigen Boden (5b) sowie einen wasserdurchlässigen Deckel (5c) hat, wobei das Aufgussfach (3) Anschläge aufweist, die die Aufgusskapsel (5) auf Abstand zum Boden (3d) des Aufgussfaches (3) halten, und im mittleren Teil des Bodens (3d) eine untere Öffnung (3c) hat, die über die Leitungsschleife (20, 21, 22) mit dem ersten Durchlass (1d) verbunden ist.

9. Aufgussvorrichtung nach Anspruch 8, **dadurch gekennzeichnet, dass** die Aufgusskapsel (5) an ihrem Deckel (5c) eine blinde Griffaussparung (5d) hat, in die ein Greifwerkzeug zur Manipulation der Aufgusskapsel (5) einsetzbar ist.

10. Aufgussvorrichtung nach Anspruch 8 oder 9, **dadurch gekennzeichnet, dass** die Aufgusskapsel (5) zwei zylindrische Kapseln (5e, 5f) hat, die axial ineinander eingreifen.

11. Aufgussvorrichtung nach einem der Ansprüche 1 bis 10, **dadurch gekennzeichnet, dass** die Mittel zur zeitgesteuerten Betätigung (6e) den Wasserumlauf zwischen dem Aufgussfach (3) und dem Behälter (1) am Ende einer vorbestimmten Aufgussdauer unterbrechen, die vom Benutzer zwischen vorbestimmten Zeitabläufen wählbar ist.

12. Aufgussvorrichtung nach Anspruch 11, **dadurch gekennzeichnet, dass** die vorbestimmten Aufgusszeiten 2'35",3'30",4'35" betragen.

13. Aufgussvorrichtung nach einem der Ansprüche 1 bis 12, **dadurch gekennzeichnet, dass** diese weiterhin aufweist:
- Heizmittel mit elektrischem Widerstand (50) oder Widerständen zum Erhitzen des Wasservolumens, um dieses bei einer Aufgusstemperatur zuzuführen,
- Elektrische Verbindungsmittel (51, 52) zur Verbindung der elektrischen Widerstände (50) oder des elektrischen Widerstandes mit einer äußeren Elektroenergiequelle.

14. Aufgussvorrichtung nach Anspruch 13, **dadurch gekennzeichnet, dass** die elektrischen Widerstände (50) oder der elektrische Widerstand in dem Behälter (1) an dessen Bodenwand (1e) oder der oberen Wand (2a) eines Unterteils (2) befestigt sind, auf dem sich der Behälter (1) abstützt.

15. Aufgussvorrichtung nach Anspruch 13, **dadurch gekennzeichnet, dass** die elektrischen Widerstände (50) oder der elektrische Widerstand in einer unteren Wanne (53) angeordnet sind, die über die Leitungsschleife (20, 21, 22) und die Vortriebsmittel (21) mit dem Behälter (1) verbunden ist.

## Claims

1. Brewing device comprising:
- a container (1) having a wall (1a) provided with an upper access opening (1b) for receiving and containing a volume of water,
- a brewing compartment (3) which is able to receive and contain material to be brewed and communicates with the container (1) via a first passage (1c) located at a distance from the upper access opening (1b) so as to be immersed in the volume of water,
**characterized in that** it also comprises :
- a second passage (1d), separate from the first passage (1c), which places the brewing compartment (3) into communication with the container (1) via a loop circuit (20, 21, 22) through which the water can flow between the container (1) and the brewing compartment (3),
- propulsion means (21) for forcing the flow of water in said loop circuit (20, 21, 22),
- means (4, 21, 6e) for interrupting the flow of water between the brewing compartment (3) and the container (1) at the end of a predetermined amount of brewing time, excluding a vibrations generator placed next to the brewing compartment (3) to apply vibrations to the material to be brewed in the brewing compartment (3).

2. Brewing device as claimed in claim 1, **characterized in that**:
- the first passage (1c) comprises a first orifice (1f) provided in the bottom (1e) of the container (1) and an upper orifice (3b) provided in the upper wall (2a) of the brewing compartment (3), said orifices being positioned in a manner facing one another,
- the means for interrupting the flow of water comprise a valve (4) which selectively shuts off the first passage (1c),
- the second passage (1d) places the container (1) into communication, via the loop circuit (20, 21, 22), with a lower orifice (3c) provided in the lower part of the brewing compartment (3).

3. Brewing device as claimed in claim 2, **characterized in that** it comprises:
- driving means (6) for moving the valve (4) between a withdrawn position and a position shutting off the first passage (1c),
- time control means (6e) for controlling the driving means (6) and causing the first passage (1c) to be shut off at the end of the predetermined amount of brewing time.

4. Brewing device as claimed in any one of claims 1 to 3, **characterized in that**:
- the propulsion means comprise a pump (21) inserted into the loop circuit (20, 21, 22),
- the means for interrupting the flow of water comprise time control means (6e) which interrupt the operation of the pump (21) at the end of the predetermined amount of brewing time.

5. Brewing device as claimed in claim 4, **characterized in that**:
- the first passage (1c) has a cross section larger than or equal to the cross section of the brewing compartment (3),
- the second passage (1d) is close to the first passage (1c).

6. Brewing device as claimed in either of claims 4 and 5, **characterized in that** the time control means (6e) ensure intermittent operation of the pump (21) during the predetermined amount of brewing time.

7. Brewing device as claimed in any one of claims 4 to 6, **characterized in that** the pump (21) forces the flow of water in the loop circuit (20, 21, 22) in the direction running from the brewing compartment (3) toward the second passage (1d).

8. Brewing device as claimed in any one of claims 1 to 7, **characterized in that** the brewing compartment (3) is joined to a brewing cartridge (5) having a solid side wall (5a) and having a water-permeable bottom wall (5b) and a top wall (5c), it comprises end stops that keep the brewing cartridge (5) at a distance from the bottom (3d) of the brewing compartment (3), and it comprises, in the central part of its bottom (3d), a lower orifice (3c) connected to the second passage (1d) by the loop circuit (20, 21, 22).

9. Brewing device as claimed in claim 8, **characterized in that** the brewing cartridge (5) comprises, in its top wall (5c), a blind gripping recess (5d) in which a gripping tool can take hold in order to handle the brewing cartridge (5).

10. Brewing device as claimed in either of claims 8 and 9, **characterized in that** the brewing cartridge (5) comprises two cylindrical cartridge parts (5e, 5f) which interlock axially with one another.

11. Brewing device as claimed in any one of claims 1 to 10, **characterized in that** the time control means (6e) interrupts the flow of water between the brewing compartment (3) and the container (1) at the end of a predetermined amount of brewing time selected by the user from predefined amounts of time.

12. Brewing device as claimed in claim 11, **characterized in that** the predefined amounts of time are 2'35", 3'30", 4'35".

13. Brewing device as claimed in any one of claims 1 to 12, **characterized in that** it also comprises:
- electrical resistance heating means (50) which are able to heat said volume of water in order to bring it to a brewing temperature,
- electrical connection means (51, 52) which are able to connect the electrical resistor or resistors (50) to an external source of electrical energy.

14. Brewing device as claimed in claim 13, **characterized in that** the electrical resistor or resistors (50) are located in the container (1) and are fixed to the bottom wall (1e) of the container (1) or to the upper wall (2a) of a base (2) on which the container (1) fits.

15. Brewing device as claimed in claim 13, **characterized in that** the electrical resistor or resistors (50) are located in a lower enclosure (53) in communication with the container (1) via the loop circuit (20, 21, 22) and the propulsion means (21).
